# EUROPÄISCHE PATENTSCHRIFT

(11) **EP 1 294 815 B1**
(45) Veröffentlichungstag und Bekanntmachung des Hinweises auf die Patenterteilung: **08.09.2004**
(21) Anmeldenummer: 01960321.6
(22) Anmeldetag: 15.06.2001
(51) Int. Cl.: C09D 11/10, C09D 7/12

(54) **DRUCKFARBEN UND LACKE, ENTHALTEND POLYOLEFINWACHSE**
PRINTING INKS AND LACQUERS CONTAINING POLYOLEFIN WAXES
ENCRES D'IMPRIMERIE ET PEINTURES CONTENANT DES CIRES DE POLYOLEFINE

(30) Priorität: 20.06.2000 DE 10029324
(43) Veröffentlichungstag der Anmeldung: 26.03.2003
(73) Patentinhaber: BASF AKTIENGESELLSCHAFT, 67056 Ludwigshafen (DE)
(72) Erfinder: MIHAN, Shahram, 67061 Ludwigshafen (DE); DECKERS, Andreas, 55234 Flomborn (DE)
(86) Internationale Anmeldenummer: PCT/EP2001/006824
(87) Internationale Veröffentlichungsnummer: WO 2001/098416

(56) Entgegenhaltungen:
- EP-A- 0 890 619

## Beschreibung

Die vorliegende Erfindung betrifft Druckfarben und Lacke, enthaltend als Komponente ein Polyolefinwachs, das aus einem oder mehreren Olefinen durch Katalyse mit einem Single-Site-Katalysator auf Basis eines Komplexes eines Übergangsmetalls der Gruppen 5 bis 8 des Periodensystems der Elemente hergestellt wird, der höchstens ein Cyclopentadienyl-System pro Übergangsmetall enthält. Die vorliegende Erfindung betrifft weiterhin mikronisierte Partikel aus Polyolefinwachsen zur Verwendung in den erfindungsgemäßen Druckfarben und Lacken, ein Verfahren zur Herstellung von Druckfarben und Lacken unter Verwendung der erfindungsgemäßen mikronisierten Polyolefinwachspartikel sowie ein Verfahren zum Bedrucken von Papier oder Pappe unter Verwendung der erfindungsgemäßen Druckfarben.

Lacke und Druckfarben setzen sich aus mehreren Bestandteilen zusammen.

Die vier Hauptbestandteile der Druckfarben sind:
- Farbmittel, meist synthetische anorganische oder organische Pigmente; beispielsweise
   - Anorganische Pigmente wie TiO₂, Eisenblau-Pigmente oder Eisenoxid-Pigmente;
   - Metallpigmente wie Bronzen, beispielsweise Aluminiumpulver ("Silberbronze"), Messingpulver ("Goldbronze") oder Kupferpulver ("Cu-Bronze");
   - Interferenzpigmente, z.B. Perlmuttglanz, Perlglanz;
   - Pigmentruß;
   - Organische Azopigmente, Isoindolinpigmente, Phthalocyaninpigmente oder Luminiszenzpigmente;
- Füllstoffe, beispielsweise Calciumcarbonat, Aluminiumoxidhydrat, Bariumsulfat, Kieselsäure, Aluminiumsilikat (Kaolin) oder Magnesiumsilikat (Talkum);
- Bindemittel, ausgewählt aus fetten, oxidativ trocknenden oder nicht trocknenden Ölen und daraus hergestellten Alkydharzen oder Lösungen von Harzen;
- Lösemittel, beispielsweise Wasser.

Weiterhin werden Hilfsstoffe als Nebenbestandteile eingearbeitet, beispielsweise Wachse, Fettsäureamide, Weichmacher, Trockenstoffe und Trocknungsverzögerer.

Toner für Kopierer können als spezielle Druckfarben definiert werden, sie enthalten Wachse nicht als Nebenbestandteil, sondern als Hauptkomponente.

Wachse in Druckfarben und Lacken haben mehrere Effekte:
- sie erhöhen die Abrieb-, Kratz- und Scheuerfestigkeit, also die mechanischen Eigenschaften von Druckerzeugnissen;
- in flüssigen Lacken wirken sie als rheologische Additive, d.h. sie können die Ausrichtung von Pigmenten, insbesondere von Effektpigmenten stützen und das Absetzverhalten von Pigmenten und Füllstoffen steuern;
- sie können die Oberflächen hydrophobieren und damit das schmutzabweisende Verhalten verbessern;
- sie erhöhen die Gleitfähigkeit der bedruckten Flächen und damit die mechanische Stabilität, beispielsweise verringern sie die Bildung von Metallmarkierungsspuren;
- sie erhöhen die thermische Belastbarkeit;
- mit ihnen lassen sich Mattierungseffekte erreichen, durch die beispielsweise die Lesbarkeit von Druckerzeugnissen auch bei ungünstigen Lichtverhältnissen (Spiegeleffekte) verbessert werden kann.

Damit Wachse die für Lacke und Druckfarben optimale Morphologie aufweisen, werden sie vorzugsweise mikronsiert, d.h. durch Vermahlen, Versprühen oder (im Falle von Nicht-Polyethylenwachsen) durch Perlpolymerisation durch das gewählte Polymerisationsverfahren in die richtige Morphologie gebracht. Unter mikronisierten Wachsen versteht man dementsprechend Wachs-Pulver mit einem maximalen Korndurchmesser von 30 µm.

Dabei ist es wichtig, dass die verwendeten Wachse eine gewisse Aufschwimmfähigkeit besitzen, weil nur dadurch Gleit-, Trenn und Schutzschichten im optimalen Maße gebildet werden können.

Es ist weiterhin eine Aufgabe der verwendeten Wachse, während des Formulierungsprozesses keine großen Pigment-Agglomerate entstehen zu lassen. Weiterhin ist es wünschenswert, eventuell vorher gebildete agglomerierte Pigmente zu separieren und in die sogenannten Primärpartikel aufzuspalten. Schließlich sollen die Primärpartikel auch nach dem Formulierungsprozess separiert bleiben und beim Abkühlen nicht wieder aggregieren.

Dazu werden mehrere Anforderungen an das Wachs gestellt. Eine dieser Anforderungen betrifft die Viskosität der Schmelze. Die Viskosität der Schmelze sollte möglichst niedrig sein, damit während der Formulierung, die üblicherweise durch Mischen bei einer Temperatur oberhalb der Schmelztemperatur des Wachses erfolgt, das aufgeschmolzene Wachs gut durch die Hohlräume innerhalb der Agglomerate des Pigments penetrieren kann. Durch die so ausgeübten Scherkräfte erfolgt ein leichteres Aufspalten der Agglomerate in die Primärpartikel.

Auch die Benetzungsfähigkeit der Wachse sollte gut sein.

Prinzipiell können natürliche und synthetische Wachse verwendet werden. Die am besten geeigneten Wachse sind Polyolefinwachse. Diese lassen sich entweder durch radikalische Polymerisation von Ethylen im Hochdruckverfahren (vgl. *Ullmann's Enyclopädie der technischen Chemie,* 4. Auflage, Stichworte: Wachse, Bd. 24, S. 36 ff., Thieme Verlag Stuttgart, 1977) oder durch Ziegler-Natta-Polymerisation von Ethylen oder Propylen erhalten (DE-A 15 20 914, EP-A 584 586). Durch diese Methoden lassen sich Polyolefinwachse gewinnen, die eine breite Molekulargewichtsverteilung und einen ungleichmäßigen Comonomereinbau aufweisen. Die in diesen Produkten anwesenden niedermolekularen Anteile führen meist zu einer verminderten Härte der fertigen Lacke oder Druckfarben.

Aus EP-A 890 619 ist die Verwendung von Wachsen, bevorzugt Polyethylenwachsen, bekannt, die durch Metallocenkatalyse erhalten wurden. Sie verursachen eine verbesserte Härte der damit hergestellten Druckfarben und Lacke. Für praktische Zwecke ist jedoch eine weitere Verbesserung wünschenswert.

Es wurde nun gefunden, dass sich Wachse, die mit Hilfe eines Komplexes der allgemeinen Formel I a bis c hergestellt wurden, besonders gut als Additive in Druckfarben und Lacken eignen.

Wachse, die sich mit Hilfe von solchen Single-Site-Katalysatoren eines Übergangsmetalls der Gruppen 5 bis 8 des Periodensystems herstellen lassen, die höchstens ein Cyclopentadienyl-System pro Übergangsmetallatom enthalten, sind als solche bekannt. Es handelt sich bei den dafür notwendigen Übergangsmetallkomplexen um Verbindungen der allgemeinen Formel I a bis c.

In Formel I a 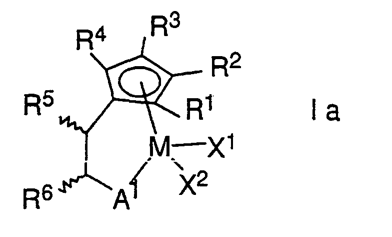 sind die Variablen wie folgt definiert:
- M: ist ein Element aus der Reihe V, Nb, Ta, Cr, Mo, W, Mn, Fe in der Oxidationsstufe +3; bevorzugt V, Cr oder Mo und besonders bevorzugt Cr;
- X¹,X²: sind ausgewählt aus
- Halogen wie Fluor, Chlor, Brom oder Jod, wobei Chlor und Brom besonders bevorzugt sind;
- Trifluoracetat,
- BF₄-, PF₆- oder SbF₆-,
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
- NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;

Bevorzugt sind X¹ und X² gleich, ganz besonders bevorzugt sind X¹ und X² Chlor.

R¹ bis R⁶ sind unabhängig voneinander
- Wasserstoff,
- Halogen wie Fluor, Chlor, Brom oder Jod, wobei Chlor und Brom bevorzugt sind;
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, -n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₁₂-Al-kyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-l-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;
- ist unter A¹ O-R¹³, S-R¹³, N(R¹³)₂ oder P(R¹³)₂ zu verstehen, wobei R¹³ ausgewählt wird aus Halogen, C₁-C₁₂-Alkyl, C₂-C₁₂-Alkenyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind.

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I a R³ und R⁴ zusammen sein: -(CH₂)₃-(Trimethylen), -(CH₂)₄- (Tetramethylen), -(CH₂)₅- (Pentamethylen) , - (CH₂)₆- (Hexamethylen), -CH₂-CH=CH-, -CH₂-CH=CH-CH₂-, -CH=CH-CH=CH-, -O-CH₂-O-, -O-CH(CH₃)-O-, -O-CH-(C₆H₅)-O-, -O-CH₂-CH₂-O-, -O-C(CH₃)₂-O-, -NCH₃-CH₂-CH₂-NCH₃-, -NCH₃-CH₂-NCH₃oder -O-Si (CH₃)₂-O-.

In einer weiteren Ausführungsform der vorliegenden Erfindung werden als katalytisch aktive Komponenten Verbindungen der allgemeinen Formel I b verwendet.

In Formel I b sind die Variablen wie folgt definiert: 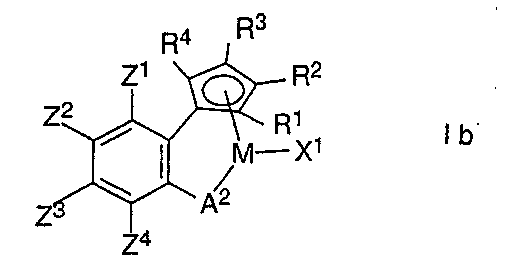 Z¹ bis Z⁴ sind unabhängig voneinander
- Wasserstoff,
- Halogen wie Fluor, Chlor, Brom oder Jod, wobei Chlor und Brom bevorzugt sind;
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₁₂-Al-kyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis (ω-C₈-Alkenyl wie Vinyl, Allyl, But-3-en-1-yl, (ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert:-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;
- A² ausgewählt aus Sauerstoff, Schwefel, N-R¹³ und P-R¹³, bevorzugt N-R¹³ oder P-R¹³, wobei R¹³ wie oben spezifiziert ist.

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I b R³ und R⁴ oder Z¹ und Z² zusammen sein: -(CH₂)₃- (Trimethylen), -(CH₂)₄- (Tetramethylen), -(CH₂)₅-(Pentamethylen), -(CH₂)₆- (Hexamethylen), -CH₂-CH=CH-, -CH₂-CH=CH-CH₂-, -CH=CH-CH=CH-, -O-CH₂-O-. -O-CH(CH₃)-O-, -O-CH-(C₆H₅)-O-, -O-CH₂-CH₂-O-, -O-C(CH₃)₂-O-, -NCH₃-CH₂-CH₂-NCH₃-, -NCH₃-CH₂-NCH₃- oder -O-Si(CH₃)₂-O-.

In einer weiteren besonderen Ausführungsform können Z⁴ und A² miteinander unter Einbeziehung des Phenylrings in Formel I b einen 5- bis 10-gliedrigen Ring bilden. In einer bevorzugten Ausführungsform bilden Z⁴ und A² unter Einbeziehung des Phenylrings ein Indol-System.

Die übrigen Variablen R¹ bis R⁴, M, X¹ und X² sind wie in Formel I a definiert.

In Formel I c 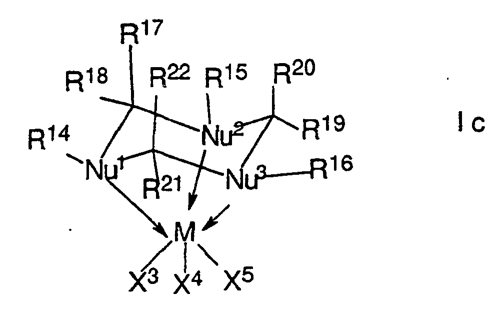 sind die Variablen wie folgt definiert:
X³, X⁴ und X⁵ sind unabhängig voneinander
   - Halogen wie Fluor, Chlor, Brom oder Jod, wobei Chlor und Brom besonders bevorzugt sind;
   - Trifluoracetat,
   - BF₄⁻, PF₆⁻ oder SbF₆⁻,
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;

   Bevorzugt sind X³ bis X⁵ gleich, ganz besonders bevorzugt sind X³ bis X⁵ Chlor.
   Nu¹ bis Nu³ sind unabhängig voneinander ausgewählt aus N oder P, bevorzugt sind Nu¹ und Nu² jeweils N und besonders bevorzugt sind Nu¹ bis Nu³ jeweils N.
R¹⁴ bis R¹⁶ sind unabhängig voneinander
   - Wasserstoff,
   - Halogen wie Fluor, Chlor, Brom oder Jod, wobei Chlor und Brom bevorzugt sind;
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach mit Donoratomen substituiertes C₁-C₁₂-Al-kyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy; wobei diese Gruppen wie oben spezifiziert sind; Bevorzugt sind R¹⁴ bis R¹⁶ gleich.
R¹⁷ bis R²² sind unabhängig voneinander
   - Wasserstoff,
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach halogeniertes C₁-C₁₂-Alkyl wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryl, die ihrerseits substituiert sind mit einem oder mehreren C₁-C₁₂-Alkyl, C₁-C₁₂-Alkeayl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind.

Bevorzugt sind R¹⁷, R¹⁹ und R²¹ jeweils gleich, und bevorzugt sind R¹⁸, R²⁰ und R²² jeweils Wasserstoff. Ganz besonders bevorzugt sind R¹⁷ bis R²² Wasserstoff. Die zur Synthese dieser ganz besonders bevorzugten Verbindungen notwendigen Triazacyclohexan-Liganden lassen sich besonders gut synthetisieren.

In einer besonderen Ausführungsform der allgemeinen Formel I c können zwei benachbarte Reste gemeinsam einen gesättigten oder ungesättigten 4- bis 9-gliedrigen Ring bilden können, beispielsweise können zwei Reste zusammen sein: C₃-C₉-Alkyliden wie beispielsweise -(CH₂)₃- (Trimethylen), -(CH₂)₄- (Tetramethylen) , -(CH₂)₅- (Pentamethylen), -(CH₂)₆- (Hexamethylen), -CH₂-CH=CH-, -CH₂-CH=CH-CH₂-, -CH=CH-CH=CH-; weiterhin cyclische Aldole, Ketale oder Amine wie beispielsweise -O-CH₂-O-, -O-CH(CH₃)-O-, -O-CH-(C₆H₅)-O-, -O-CH₂-CH₂-O-, -O-C(CH₃)₂-O-, -N(CH₃)-CH₂-CH₂-N(CH₃)-, -N(CH₃)-CH₂-N(CH₃)- oder -O-Si(CH₃)₂-O-.

Die übrigen Variablen sind wie in Formel I a definiert.

Die Herstellung der Übergangsmetallkomplexe der allgemeinen Formel I a bis c ist an sich bekannt. Geeignete Synthesen für Komplexe der allgemeinen Formel I a und b finden sich in DE-A 197 10 615, bei A. Döhring *et al., Organometallics* **2000,** *19*, 388 sowie bei J.C. Weber, Dissertation, MPI Mülheim/Ruhr, 1999.

Die Herstellung der besonders bevorzugten Triazacycloalkan-Liganden für Komplexe der allgemeinen Formel I c ist an sich bekannt. Die zur Synthese der ganz besonders bevorzugten Verbindungen der allgemeinen Formel I c, bei denen R¹⁷ bis R²² jeweils Wasserstoff und die Reste R¹⁴ bis R¹⁶ jeweils gleich sind, lassen sich ganz besonders gut durch Vermischen von Formaldehyd beispielsweise in der Form von Formalin-Lösung und dem zugehörigen Amin R¹⁴-NH₂ synthetisieren. Verschiedene Synthesewege für diese Komplexliganden werden z.B. beschrieben in F. Weitl, *et al*. *J. Am. Chem. Soc.* **1979,** *101* 2728; M. Takahashi, S. Takamoto, *Bull. Chem. Soc. Japan* **1977,** *50,* 3413; T. Arishima *et al., Nippon Kagaku Kaishi* **1973**, 1119; L. Christiansen et *al. Inorg. Chem*. **1986,** *25*, 2813; L.R. Gahan *et al., Aust. J. Chem.* **1982,** *35,* 1119; B.A. Sayer *et al., Inorg. Chim*. *Acta,* **1983,** 77, L63; K Wieghardt et al., Z. *Naturforsch.,* **1983,** *38b,* 81 und **I**.A. Fallis et al., ***J.** Chem*. *Soc., Chem. Commun.* **1998,** 665.

Die Metallkomplexe, insbesondere die Chromkomplexe, lassen sich auf einfache Weise erhalten, wenn man die entsprechenden Metallsalze wie z.B. Metallchloride oder Metallcarbonyle mit den Liganden umsetzt, z. B. in P. Chaudhuri, K. Wieghardt, *Prog. Inorg.* Chem. **1987,** 35, 329 oder G. P. Stahley et *al*., *Acta Crystall*. **1995,** *C51,* 18.

Damit vorstehende Komplexe der allgemeinen Formeln I a bis c katalytisch aktiv sind, werden sie mit einer Kationen-bildenden Verbindung aktiviert. Geeignete Kationen-bildenden Verbindungen sind ausgewählte Aluminium- oder Bor-Verbindungen mit elektronenziehenden Resten (z.B. Trispentafluorphenylboran, Trispentafluorphenylaluminium, *N*,*N*-Dimethylanilinium-tetrakis-pentafluorphenylborat, Tri-n-butylammonium-tetrakis-pentafluorphenylborat, *N*,*N*-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Diese Aktivatoren für Komplexe der allgemeinen Formeln I a bis c sind in DE-A 199 35 407, in PCT/EP 0002716 bzw. in Angew. Chem. Int. Ed., 1994, Band 33, S. 1877, beschrieben. Bevorzugt sind Dimethylanilinium-tetrakis-pentafluorphenylborat, Tritylium-tetrakispentafluorphenylborat sowie Trispentafluorphenylboran.

Verwendet man Bor- oder Aluminiumverbindungen als Aktivatoren für die Komplexe der allgemeinen Formel I a bis c, so setzt man sie im Allgemeinen in einem molaren Verhältnis von 1 : 10 bis 10 : 1, bezogen auf M, ein; bevorzugt 1 : 2 bis 5 : 1 nd besonders bevorzugt 1 : 1,5 bis 1,5 : 1.

Eine andere geeignete Klasse Kationen-bildender Verbindungen sind die Alumincxane der allgemeinen Formeln II a und b.

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs II a und b. Diese Gemische liegen vermutlich in einem dynamischen Gleichgewicht zueinander vor.

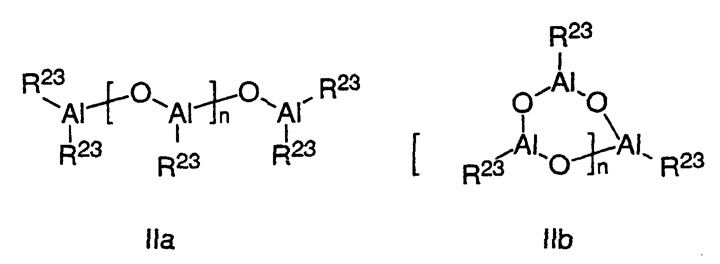

In Formel II a und b sind die Reste R²³ unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* **1996**, 15, 2213-26; A.R. Barron *Macromol. Symp.* **1995**, *97*, 15-25). Unabhängig davon, wie die Struktur der Aluminoxane tatsächlich aussieht, sind sie als Aktivatoren für Komplexe von Übergangsmetallen der allgemeinen Formeln I a bis c geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexe der allgemeinen Formel I a bis c mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10000, bevorzugt 1 : 50 bis 1 : 1000 und besonders bevorzugt 1 : 100 bis 1 : 500.

Der gewählte Komplex der allgemeinen Formeln I a bis c und die Kationen-bildende Verbindung bilden zusammen ein Katalysatorsystem. Durch Zugabe einer oder mehrerer weiteren Aluminiumalkylverbindung der allgemeinen Formel Al(R²³)₃, kann die Aktivität dieses Katalysatorsystems weiter gesteigert werden.

Durch Zugabe von weiterem Aluminiumalkyl der allgemeinen Formel Al(R²³)₃ oder Aluminoxanen kann die Aktivität des Katalysatorsystems erhöht werden; Aluminiumalkyle der allgemeinen Formel Al(R²³)₃ oder Aluminoxane können auch als Molmassenregler wirken. Ein weiterer effektiver Molmassenregler ist Wasserstoff. Besonders gut kann man die Molmasse durch die Reaktionstemperatur und die Verweilzeit regeln.

Moderne großtechnische Herstellungsverfahren für Polyolefinwachse sind Lösungsverfahren, Suspensionsverfahren, Massepolymerisationsverfahren in flüssigem oder überkritischem Monomer sowie Gasphasenverfahren, wobei es sich bei letzteren um gerührte Gasphasen oder um Gasphasenwirbelschichtverfahren handeln kann.

Damit die Komplexe der allgemeinen Formeln I a bis c in Suspensionsverfahren, Massepolymerisationsverfahren oder Gasphasenverfahren eingesetzt werden können, ist es vorteilhaft, sie auf einem festen Träger zu immobilisieren..Andernfalls kann es zu Morphologieproblemen des Polymers (Brocken, Wandbeläge, Verstopfungen in Leitungen oder Wärmetauschern) kommen, die zum Abschalten der Anlage zwingen.

Katalysatorsysteme aus Komplexen der allgemeinen Formeln I a bis c und Aktivator lassen sich gut auf einem festen Träger abscheiden. Als Trägermaterialien kommen z.B. poröse Metalloxide von Metallen der Gruppen 2-14 oder Mischungen derselben infrage, weiterhin Schichtsilikate, aber auch feste Halogenide von Metallen der Gruppen 1, 2 und 13 und Polymere wie beispielsweise Polyethylen oder Polypropylen. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel 332, Sylopol® 948 oder Sylopol 952 oder S 2101 der Fa. W.R. Grace oder ES 70X der Firma Crosfield.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet; für MgCl₂-Träger sind Temperaturbereiche von 50 bis 100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische Vorbehandlung des Trägermaterials ist möglich.

Zur Dotierung des Katalysators verfährt man im Allgemeinen so, dass man das Trägermaterial in einem Suspensionsmittel aufschlämmt und diese Suspension mit der Lösung des Komplexes der Formel I a bis c und des Aktivators vereinigt. Dabei beträgt das Volumen des Suspensionsmittels das 1- bis 20-fache des Porenvolumens des Katalysatorträgers. Anschließend kann der Katalysator durch eine geeignete Methode vom Suspensionsmittel getrennt werden, wie filtrieren, zentrifugieren oder eindampfen.

Zur besseren Kontrolle der Morphologie kann man den Katalysator vor der eigentlichen Polymerisation mit geringen Mengen Monomer vorpolymerisieren. Die Vorpolymerisation kann man durch Dosierung eines reversiblen Katalysatorgiftes oder durch Beenden der Monomerdosierung abbrechen und anschließend den vorpolymerisierten Katalysator in die Polymerisationsanlage dosieren.

Als Monomer sind die folgenden Olefine geeignet: Ethylen, Propylen, 1-Buten, 1-Penten, 1-Hexen, 1-Octen, 1-Decen oder 1-Undecen, wobei Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten ist ein geeignetes Comonomer.

Um eine bei Polymerisationen mitunter zu beobachtende elektrostatische Aufladung der Polymerisationsanlage oder des Produkts zu vermeiden, kann man der Reaktionsmischung ein Antistatikum zusetzen. Geeignete Antistatika sind verdünnte Lösungen aliphatischer Alkohole, beispielsweise Isopropanol, in Paraffinen wie beispielsweise n-Heptan. Weitere geeignete Antistatika sind als Stadis@-Marken von der Firma DuPont kommerziell erhältlich.

Um die erfindungsgemäßen Lacke und Druckfarben herzustellen, wird das in großtechnischen Anlagen üblicherweise als Grieß anfallende Wachs in einem nächsten Schritt mikronisiert. Zum Mikronisieren werden Mühlen verwendet, beispielsweise Luftstrahlmühlen. Durch das Mikronisieren fällt das Wachs als sogenanntes Mikropulver an, wobei der maximale Korndurchmesser 30 µm, bevorzugt 25 µm nicht überschreitet.

Die an sich bekannten Hauptbestandteile des erfindungsgemäßen Lackes oder der erfindungsgemäßen Druckfarbe werden zunächst in den durch die Rezeptur vorgeschriebene Mengen in Dissolvern genannten Schnellrührern mit dem mikronisierten Wachs vorgemischt. Anschließend werden sie beispielsweise in Rührwerkskugelmühlen mit Reibspalt, die mit Mahlperlen eines Durchmessers von 0,05 bis 5 mm Durchmesser, bevorzugt 0,5 bis 2,5 und besonders bevorzugt 2 mm Durchmesser beschickt sind, weiter gemischt. Anschließend wird der erfindungsgemäße Lack bzw. die erfindungsgemäße Farbe optional durch ein Dreiwalzwerk geführt, um den untergerührten Sauerstoff zu entfernen. Alternativ kann die Druckfarbe auch durch Anlegen eines Vakuums entgast werden.

Der Gewichtsanteil des Wachses an den erfindungsgemäßen Druckfarben und Lacken beträgt 0,05 bis 65 Gew.-%, bevorzugt 0,1 bis. 10 Gew.-% und besonders bevorzugt 0,5 bis 3 Gew.-%. Der Gewichtsanteil des Wachses an den erfindungsgemäßen Tonern für Kopierer beträgt beispielsweise 45 bis 65 Gew.-%.

Weitere Komponenten der erfindungsgemäßen Druckfarben sind 5 bis 30 Gew.-% eines anorganischen oder organischen Pigments, wobei organische Pigmente bevorzugt sind; weiterhin 65 bis 90 Gew.-% Bindemittel, bestehend aus einem Harz sowie optional einem oder mehreren Lösemitteln wie beispielsweise Ethanol, Methanol, Isopropanol, Wasser, Toluol oder niedermolekulare Kohlenwasserstoffe, weiterhin optional Öle und Antioxidantien.

Die erfindungsgemäßen Druckfarben zeichnen sich durch besondere mechanische Stabilität, insbesondere Abriebfestigkeit und durch besonderen Glanz aus.

### Arbeitsbeispiel

Herstellung des Komplexes (n-C₁₂H₂₅NCH₂)₃CrCl₃ und Polymerisation von Ethylen sind in DE-A 199 35 407, in PCT/EP 0002716 bzw. in Angew. Chem. Int. Ed. 1994, Bd. 33, S. 1877, grundsätzlich beschrieben. Die Herstellung von Offsetdruckfarben sind beispielsweise in der Produktbroschüre "Luwax ® Poligen ® Wachse und Dispersionen - Anwendung in Druckfarben" aus dem Jahr 1992 grundsätzlich beschrieben.

Die Scheuerfestigkeit wurde in einem Prüfbau-Quartant-Scheuerprüfer bestimmt, für die Glanzmessung ein Mehrwinkel-Reflektometer "Multigloss" der Fa. Byk-Chemie.

In einem 10-Liter-Stahlautoklav (Fa. Büchi) wurde 50 mg (67 µmol) (n-C₁₂H₂₅NCH₂)₃CrCl₃, gelöst in Toluol, mit 14 ml 30% MAO der Fa. Witco aktiviert, wobei ein Al:Cr-Verhältnis von 1000:1 eingestellt wurde. Es wurden 4 1 Isobutan und 80 1 (3,8 mol) Wasserstoff aufgepresst, danach wurde der Autoklav auf 90°C erwärmt. Anschließend wurden 40 bar Ethylen aufgepresst und 30 Minuten polymerisiert, wobei der Druck durch Nachdosieren von Ethylen bei 40 bar gehalten wurde.

Die Polymerisation wurde durch Entspannen des Autoklaven abgebrochen.

Ausbeute: 460 g, das entspricht einer Aktivität von 14000 kg PE (mol Cr·h) .

Das so erhaltene Wachs hatte die folgenden Eigenschaften: Festpunkt 128, 5°C; M_{w}: 5200 g, Mₙ: 2100 g. M_{w}/Mₙ = 2,5.

Zahl der Vinyl- und Vinyliden-Doppelbindungen/1000 C-Atome: 0,5 bis 2,3

Das Wachs wurde in einer Gegenstrahlmühle mikronisiert, bis es einen Durchmesser von 9 µm (Medianwert), bestimmt durch Laserbeugung nach Coulter-Counter, hatte.

Beispiel 1: 1,0 Gew.-% Wachs wurde in einem Kohlenwasserstoff (Toluol) dispergiert und dann in eine Offsetdruckfarbe Novaboard cyan 4 C 86 von K + E Druckfarben (wachsfrei) eingearbeitet, bestehend aus 18 Gew.-% organischem Pigment, 31 Gew.-% Kolophoniumharz, 34 Gew.-% Leinharz und 16 Gew.-% Mineralöl.

Für die Vergleichsbeispiele wurden die folgenden Wachse auf analoge Weise in die Offsetdruckfarbe eingearbeitet und geprüft.
- V1:: Luwax® AF 30, BASF Aktiengesellschaft, hergestellt durch Hochdruckpolymerisation
- V2:: Clariant Wachs PE 520® hergestellt durch Ziegler-Natta-Katalyse
- V3:: Polyethylenwachs, hergestellt durch Metallocen-Katalyse nach EP-A 0 890 619, Beispiel 3

Zur Überprüfung der Abriebfestigkeit wurde ein Probedruck mit einer Prüfbau-Mehrzweck-Druckmaschine der Fa. Dr. Dürner auf Papier des Typs Phoenomatt 115 g/m² (Scheufelen GmbH & Co. KG) angefertigt. Das Scheuerverhalten wurde auf einem Scheuerprüf-Gerät der Firma Scheuerprüfer Prüfbau ouartett) untersucht, wobei eine Scheuerbelastung von 48 g/cm² und eine Scheuergeschwindigkeit von 15 cm/s eingestellt wurde. Beurteilt wurde die Intensität der auf das Prüfblatt übertragenen Farbe durch Bestimmung der Farbdifferenz nach DIN 6174, wobei ein geringerer Wert der Fardifferenz vorteilhafte Eigenschaften anzeigt.

**Tabelle 1:**

| Ergebnisse | | |
|---|---|---|
| Versuch | Farbdifferenz nach 200 Hub | Partikeldurchmesser d₅₀ [µm] |
| 1 | 1,9 | 8,9 |
| V1 | 3,9 | 8,7 |
| V2 | 3,2 | 9,1 |
| V3 | 2,2 | 9,0 |
| Ohne Wachs | 15,9 | - |

## Patentansprüche

1. Druckfarben und Lacke, enthaltend als Komponente ein Polyolefinwachs, das aus einem oder mehreren Olefinen hergestellt wird durch Katalyse mit einem Single-Site-Katalysator auf Basis eines Komplexes der Formeln I a bis I c 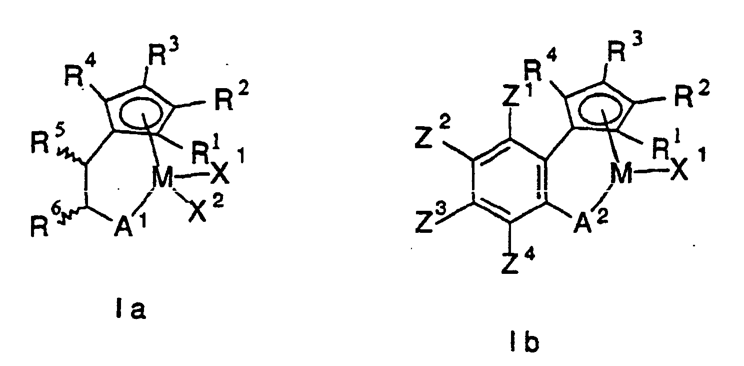 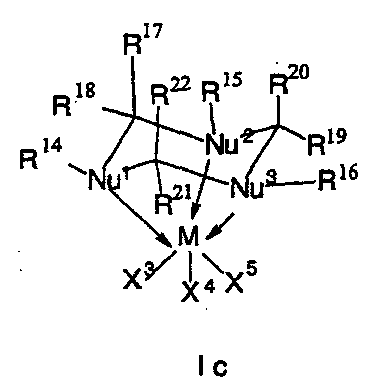 in denen die variablen wie folgt definiert sind:
M ist ein Element aus der Reihe V, Nb, Ta, Cr, Mo, W, Mn, Fe in der Oxidationsstufe +3
X¹ bis X⁵ ausgewählt aus Halogen, Trifluoracetat, BF₄-, PF₆- oder SbF₆-, C₁-C₁₈-Alkyl, C₃-C₁₂-Cycloalkyl, C₇- bis C₂₀-Aralkyl, C₆-C₁₄-Aryl, C₁-C₁₂-Alkoxy, NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5- bis 10-gliedrigen Ring bilden können;
R¹ bis R⁶, Z¹ bis Z⁴, R¹⁴ bis R¹⁶ unabhängig voneinander gewählt aus
Wasserstoff,
Halogen,
C₁-C₁₈-Alkyl,
ein- oder mehrfach mit Donoratomen substituiertes C₁-C₁₂-Alkyl,
ein- oder mehrfach halogenierte C₁-C₁₂-Alkylgruppen, C₂-C₁₂-Alkenyl,
C₃-C₁₂-Cycloalkyl,
C₇- bis C₂₀-Aralkyl,
C₆-C₁₄-Aryl,
Silyl SiR¹⁰R¹¹R¹², wobei R¹⁰ bis R¹² unabhängig voneinander aus Wasserstoff, C₁-C₁₂-Alkyl, C₇-C₁₅-Aralkyl und
C₆-C₁₄-Aryl ausgewählt sind;
Siloxy OSiR¹⁰R¹¹R¹²,
C₁-C₁₂-Alkoxy,
C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy;
wobei zwei benachbarte Reste miteinander unter Einbeziehung des stammaromaten in Formel I a bzw. I b einen 5- bis 10-gliedrigen Ring bilden können;
R¹⁷ bis R²² unabhängig voneinander gewählt aus Wasserstoff,
C₁-C₁₈-Alkyl,
ein- oder mehrfach mit Donoratomen substituiertes C₁-C₁₂-Alkyl,
ein- oder mehrfach halogenierte C₁-C₁₂-Alkylgruppen, C₂-C₁₂-Alkenyl,
C₃-C₁₂-Cycloalkyl,
C₇- bis C₂₀-Aralkyl,
C₆-C₁₄-Aryl,
Silyl SiR¹⁰R¹¹R¹², wobei R¹⁰ bis R¹² unabhängig voneinander aus Wasserstoff, C₁-C₁₂-Alkyl, C₇-C₁₅-Aralkyl und
C₆-C₁₄-Aryl ausgewählt sind;
Siloxy OSiR¹⁰R¹¹R¹²,
C₁-C₁₂-Alkoxy,
C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy;
wobei zwei benachbarte Reste R¹⁴ bis R²² in Formel I c miteinander einen gesättigten oder ungesättigten 4- bis 9-gliedrigen Ring bilden können;
A¹ O-R¹³, S-R¹³, N*-*(R¹³)₂ oder P-(R¹³)₂ zu verstehen, wobei R¹³ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind;
A² Sauerstoff, Schwefel, N-R¹³ oder P-R¹³ zu verstehen, wobei R¹³ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind;
wobei Z⁴ und A² in Formel I b miteinander unter Einbeziehung des Phenylrings in Formel I b einen 5- bis 10-gliedrigen Ring bilden können;
Nu¹ bis Nu³ jeweils N oder P.

2. Druckfarben und Lacke gemäß Anspruch 1, **dadurch gekennzeichnet, dass** das Polyolefinwachs durch Katalyse mit einem Single-Site-Katalysator auf Basis eines Tri-pnicogen-cyclohexankomplexes der Formel I c hergestellt wird.

3. Druckfarben und Lacke gemäß den Ansprüchen 1 und 2, **dadurch gekennzeichnet, dass** das Polyolefinwachs durch Katalyse mit einem Single-Site-Katalysator auf Basis eines 1,3,5-Triazacyclohexankomplexes, eines 1.3-Diaza-5-phosphacyclohexankomplexes oder eines 1,3,5-Triphosphacyclohexankomplexes der Formel Ic hergestellt wird.

4. Druckfarben und Lacke gemäß den Ansprüchen 1 bis 3, **dadurch gekennzeichnet, dass** das Polyolefinwachs durch Katalyse mit einem Single-Site-Katalysator auf Basis eines Cr-Komplexes der Formel Ic hergestellt wird.

5. Verwendung von mikronisierten Partikeln aus Polyolefinwachsen die gemäß den Ansprüchen 1 bis 4 hergestellt wurden, zur Herstellung von Druckfarben und Lacken.

6. verfahren zur Herstellung von Druckfarben und Lacken, **dadurch gekennzeichnet, daß** man mikronisierte Polyolefinwachspartikel auf Basis von Polyolefinwachsen, die gemäß den Ansprüchen 1 bis 4 hergestellt wurden, verwendet.

7. Verfahren zum Bedrucken von Papier oder Pappe, **dadurch gekennzeichnet, dass** man Druckfarben nach den Ansprüchen 1 bis 4 einsetzt.

## Claims

1. A printing ink or paint comprising a polyolefin wax component prepared from one or more olefins by catalysis with a single-site catalyst based on a complex of the formulae I a to I c, 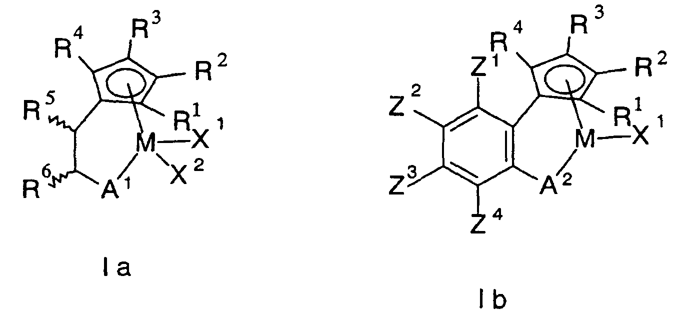 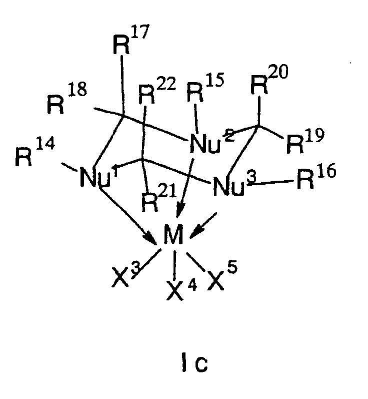 where the variables are defined as follows:
M is an element from the group consisting of V, Nb, Ta, Cr, Mo, W, Mn, Fe in oxidation state +3;
X¹ to X⁵ are selected from halogen, trifluoroacetate, BF₄-, PF₆- or SbF₆-, C₁-C₁₈ alkyl, C₃-C₁₂ cycloalkyl, C₇ to C₂₀ aralkyl, C₆-C₁₄ aryl, C₁-C₁₂ alkoxy, NR⁸R⁹, where R⁸ and R⁹ independently of one another are selected from hydrogen, C₁-C₁₂ alkyl, C₂-C₁₂ alkenyl and C₆-C₁₄ aryl, which are able to form a saturated or unsaturated 5- to 10-membered ring;
R¹ to R⁶, Z¹ to Z⁴, R¹⁴ to R¹⁶ independently of one another are selected from
hydrogen,
halogen,
C₁-C₁₈ alkyl,
C₁-C₁₂ alkyl substituted one or more times by donor atoms, mono- or polyhalogenated C₁-C₁₂ alkyl groups,
C₂-C₁₂ alkenyl,
C₃-C₁₂ cycloalkyl,
C₇ to C₂₀ aralkyl,
C₆-C₁₄ aryl,
silyl SiR¹⁰R¹¹R¹², where R¹⁰ to R¹² independently of one another are selected from hydrogen, C₁-C₁₂ alkyl, C₇-C₁₅ aralkyl and C₆-C₁₄ aryl;
siloxy OSiR¹⁰R¹¹R¹²,
C₁-C₁₂ alkoxy,
C₆-C₁₄ aryl, substituted in turn by one or more C₁-C₁₂ alkyl, C₁-C₁₂ alkenyl, C₃-C₁₂ cycloalkyl, C₆-C₁₄ aryl, silyl SiR¹⁰R¹¹R¹², siloxy OSiR¹⁰R¹¹R¹² or C₁-C₁₂ alkoxy groups;
where two adjacent radicals may together with one another and including the parent aromatic in formula I a or I b form a 5- to 10-membered ring;
R¹⁷ to R²² independently of one another are selected from
hydrogen,
C₁-C₁₈ alkyl,
C₁-C₁₂ alkyl substituted one or more times by donor atoms, mono- or polyhalogenated C₁-C₁₂ alkyl groups,
C₂-C₁₂ alkenyl,
C₃-C₁₂ cycloalkyl,
C₇ to C₂₀ aralkyl,
C₆-C₁₄ aryl,
silyl SiR¹⁰R¹¹R¹², where R¹⁰ to R¹² independently of one another are selected from hydrogen, C₁-C₁₂ alkyl, C₇-C₁₅ aralkyl and C₆-C₁₄ aryl;
siloxy OSiR¹⁰R¹¹R¹²,
C₁-C₁₂ alkoxy,
C₆-C₁₄ aryl substituted in turn by one or more C₁-C₁₂ alkyl, C₁-C₁₂ alkenyl, C₃-C₁₂ cycloalkyl, C₆-C₁₄ aryl, silyl SiR¹⁰R¹¹R¹², siloxy OSiR¹⁰R¹¹R¹² or C₁-C₁₂ alkoxy groups;
where two adjacent radicals R¹⁴ to R²² in formula I c may together form a saturated or unsaturated 4- to 9-membered ring;
A¹ is O-R¹³, S-R¹³, N-(R¹³)₂ or P-(R¹³)₂, R¹³ being selected from halogen, C₁-C₁₂ alkyl, C₃-C₁₂ cycloalkyl, substituted or unsubstituted C₆-C₁₄ aryl groups or C₁-C₁₂ alkoxy groups, these groups being as defined for R¹ to R⁶;
A² is oxygen, sulfur, N-R¹³ or P-R¹³, R¹³ being selected from halogen, C₁-C₁₂ alkyl, C₃-C₁₂ cycloalkyl, substituted or unsubstituted C₆-C₁₄ aryl groups or C₁-C₁₂ alkoxy groups, these groups being as defined for R¹ to R⁶;
where Z⁴ and A² in formula I b may together with one another and including the phenyl ring in formula I b form a 5- to 10-membered ring;
Nu¹ to Nu³ are each N or P.

2. A printing ink or paint as claimed in claim 1, wherein the polyolefin wax is prepared by catalysis with a single-site catalyst based on a tri-pnicogen-cyclohexane complex of the formula I c.

3. A printing ink or paint as claimed in either of claims 1 and 2, wherein the polyolefin wax is prepared by catalysis with a single-site catalyst based on a 1,3,5-triazacyclohexane complex, a 1,3-diaza-5-phosphacyclohexane complex or a 1,3,5-triphosphacyclohexane complex of the formula I c.

4. A printing ink or paint as claimed in any of claims 1 to 3, wherein the polyolefin wax is prepared by catalysis with a single-site catalyst based on a Cr complex of the formula *I* c.

5. The use of micronized particles of polyolefin waxes prepared as in any of claims 1 to 4 to prepare printing inks and paints.

6. A process for preparing printing inks and paints, which comprises using micronized polyolefin wax particles based on polyolefin waxes prepared as in any of claims 1 to 4.

7. A method of printing paper or cardboard, which comprises using a printing ink as claimed in any of claims 1 to 4.

## Revendications

1. Encres d'impression et peintures contenant en tant que composant une cire de polyoléfine préparée à partir d'une ou plusieurs oléfines par catalyse à l'aide d'un catalyseur à site unique (« Single-Site ») à base d'un complexe répondant à l'une des formules Ia à Ic 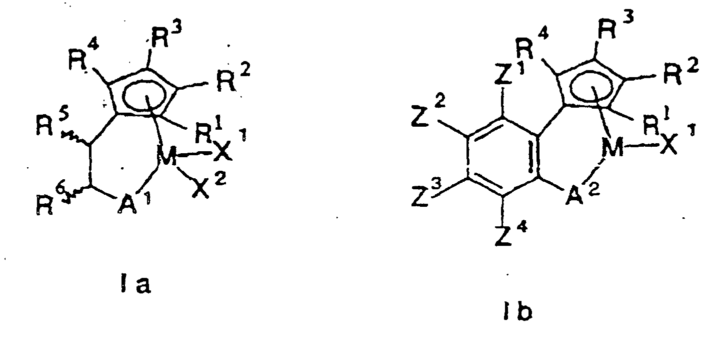 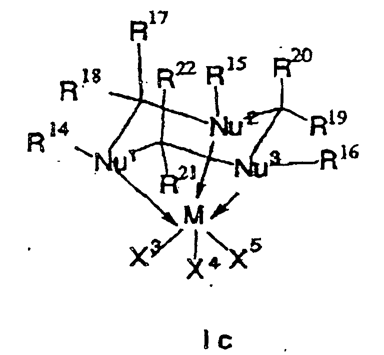 dans lesquelles les symboles ont les significations suivantes :
M représente un élément du groupe consistant en V, Nb, Ta, Cr, Mo, W, Mn, Fe au stade d'oxydation +3,
X¹ à X⁵ sont choisis parmi les halogènes, les groupes trifluoracétate, BF₄⁻, PF₆- ou SbF₆⁻, alkyle en C1-C18, cycloalkyle en C3-C12, aralkyle en C4-C20, aryle en C6-C 14, alcoxy en C1-C12, NR⁸R⁹ pour lequel R⁸ et R⁹ sont choisis, indépendamment l'un de l'autre, parmi l'hydrogène, les groupes alkyle en C1-C12, alcényle en C2-C12 et aryle en C6-C14, qui peuvent former un noyau saturé ou insaturé de 5 à 10 chaînons ;
R¹ à R⁶, Z¹ à Z⁴, R¹⁴ à R¹⁶ sont choisis, indépendamment les uns des autres, parmi l'hydrogène,
les halogènes,
les groupes alkyle en C1-C18,
les groupes alkyle en C1-C12 substitués une ou plusieurs fois par des atomes donateurs,
les groupes alkyle en C1-C12 substitués une ou plusieurs fois par des halogènes, les groupes alcényle en C2-C12,
les groupes cycloalkyle en C3-C12,
les groupes aralkyle en C7-C20,
les groupes aryle en C6-C 14,
les groupes silyle SiR¹⁰R¹¹R¹² pour lesquels R¹⁰ à R¹² représentent chacun, indépendamment les uns des autres, l'hydrogène, un groupe alkyle en C1-C12, aralkyle en C7-C 15 ou aryle en C6-C 14 ;
les groupes siloxy OsiR¹⁰R¹¹R¹²,
les groupes alcoxy en C1-C12,
les groupes aryle en C6-C14 qui peuvent eux-mêmes porter un ou plusieurs substituants alkyle en C1-C12, alcényle en C1-C12, cycloalkyle en C3-C12, aryle en C6-C14, silyle SiR¹⁰R¹¹R¹², siloxy OsiR¹⁰R¹¹R¹² ou alcoxy en C1-C12 ;
deux groupes voisins pouvant également former ensemble et avec le noyau aromatique fondamental de la formule la ou de la formule Ib un cycle de 5 à 10 chaînons ;
R¹⁷ à R²² sont choisis, indépendamment les uns des autres, parmi
l'hydrogène,
les groupes alkyle en C1-C18,
les groupes alkyle en C1-C12 substitués une ou plusieurs fois des atomes donateurs,
les groupes alkyle en C1-C12 portant un ou plusieurs substituants halogéno,
les groupes alcényle en C2-C 12,
les groupes cycloalkyle en C3-C12,
les groupes aralkyle en C7-C20,
les groupes aryle en C6-C14,
les groupes silyle SiR¹⁰R¹¹R¹² pour lesquels R¹⁰ à R¹² représentent chacun, indépendamment l'un de l'autre, l'hydrogène, un groupe alkyle en C1-C12, aralkyle en C7-C15 ou aryle en C6-C14 ;
les groupes siloxy OsiR¹⁰R¹¹R¹²,
les groupes alcoxy en C1-C12,
les groupes aryle en C6-C14 qui peuvent eux-mêmes porter un ou plusieurs substituants alkyle en C1-C12, cycloalkyle en C3-C12, aryle en C6-C14, silyle SiR¹⁰R¹¹R¹², siloxy OsiR¹⁰R¹¹R¹² ou alcoxy en C1-C12 ;
deux groupes voisins parmi R¹⁴ à R²² de la formule Ic pouvant former ensemble un cycle saturé ou insaturé de 4 à 9 chaînons ;
A¹ représente O-R¹³, S-R¹³, N-(R¹³)₂ ou P-(R¹³)₂ pour lesquels R¹³ est choisi parmi les halogènes, les groupes alkyle en C1-C12, cycloalkyle en C3-C12, aryle substitué ou non en C6-C14 ou alcoxy en C1-C12, ces groupes étant tels que définis pour R¹ à R⁶ ;
A² représente l'oxygène, le soufre, un groupe N-R¹³ ou P-R¹³, R¹³ étant choisi parmi les halogènes, les groupes alkyle en C1-C12, cycloalkyle en C3-C12, aryle substitué ou non en C6-C 14 ou alcoxy en C1-C12, ces groupes étant tels que définis pour R¹ à R⁶;
Z⁴ et A² de la formule Ib pouvant former ensemble et avec le cycle phényle de la formule Ib un cycle de 5 à 10 chaînons;
Nu¹ à Nu³ représentent chacun N ou P.

2. Encres d'impression et peintures selon la revendication 1, **caractérisées en ce que** la cire de polyoléfine à été préparée avec catalyse à l'aide d'un catalyseur à site unique à base d'un comprexe de tri-pnicogène-cyclohexane de formule Ic.

3. Encres d'impression et peintures selon les revendications 1 et 2, **caractérisées en ce que** la cire de polyoléfine a été préparée par catalyse à l'aide d'un catalyseur à site unique à base d'un complexe de 1,3,5-triazacyclohexane, d'un complexe de 1,3-diaza-5-phosphacyclohexane ou d'un complexe de 1,3,5-triphosphacyclohexane de formule Ic.

4. Encres d'impression et peintures selon les revendications 1 à 3, **caractérisées en ce que** la cire de polyoléfine a été préparée par catalyse à l'aide d'un catalyseur à site unique à base d'un complexe de chrome de formule Ic.

5. Utilisation de particules micronisées de cires de polyoléfines préparées selon les revendications 1 à 4 pour la préparation d'encres d'impression et de peintures.

6. Procédé pour la préparation d'encres d'impression et de peintures, **caractérisé en ce que** l'on utilise des particules micronisées de cire de polyoléfine à base de cires de polyoléfine préparées selon les revendications 1 à 4.

7. Procédé pour l'impression du papier ou du carton **caractérisé en ce que** l'on utilise des encres d'impression selon les revendications 1 à 4.
